Europäisches Patentamt

European Patent Office

Office européen des brevets

(11) Veröffentlichungsnummer: **0 223 855**
**B1**

(12) **EUROPÄISCHE PATENTSCHRIFT**

(45) Veröffentlichungstag der Patentschrift: 16.08.90

(21) Anmeldenummer: 85903448.0

(22) Anmeldetag: 24.04.85

(86) Internationale Anmeldenummer:
PCT/SU85/00028

(87) Internationale Veröffentlichungsnummer:
WO 86/06481 06.11.86 Gazette 86/24

(51) Int. Cl.⁵: **G 01 N 21/45, G 01 N 21/41**

(54) INTERFERENZ-POLARISATIONSREFRAKTOMETER.

(43) Veröffentlichungstag der Anmeldung:
03.06.87 Patentblatt 87/23

(45) Bekanntmachung des Hinweises auf die
Patenterteilung:
16.08.90 Patentblatt 90/33

(84) Benannte Vertragsstaaten:
AT CH DE FR GB IT LI SE

(56) Entgegenhaltungen:
DE-C- 935 094
FR-A-2 184 829
SU-A- 701 243
SU-A-1 121 606

APPLIED OPTICS, Band 16, Nr. 12, Dezember
1977, Seiten 3206-3209; L.J. SOLTZBERG et al.:
"Interferometric study of a solid-solid phase
transition"
INSTRUMENTS AND EXPERIMENTAL
TECHNIQUES, Band 18, Nr. 3, Teil 2, Mai/Juni
1975, Seiten 916-918; Yu. G. KALININ et al.:
"Twin-wave vibration-resistant interferometer"

(73) Patentinhaber: NAUCHNO-TEKHNICHESKOE
OBIEDINENIE AKADEMII NAUK SSSR
pr. Ogorodnikova 26
Leningrad, 198103 (SU)

(72) Erfinder: ALEXANDROV, Maxim Leonidovich
pr. Engelsa, 63-3-89
Leningrad, 194017 (SU)
Erfinder: VLASOV, Arkady Petrovich
ul. Beringa, 32-1-11
Leningrad, 199226 (SU)
Erfinder: KOMAROV, Nikolai Nikolaevich
ul. Trefoleva, 6/30-64
Leningrad, 198097 (SU)
Erfinder: SHEVKUNOV, Vsevolod Viktorovich
ul. Stakhanovtsev, 12-34
Leningrad, 195196 (SU)
Erfinder: GOTLIB, Vladimir Abovich
Vasilievsky ostrov, 4-ya linia, 1/3-65
Leningrad, 199034 (SU)
Erfinder: MOLOCHNIKOV, Boris Izrailevich
ul. Sojuza pechatnikov, 29-63
Leningrad, 190121 (SU)
Erfinder: SUDIIN, Valery Vladimirovich
ul. Lakhtinskaya, 20-14
Leningrad, 197136 (SU)

## EP 0 223 855 B1

⑤⑥ Entgegenhaltungen:

SOVIET INVENTIONS ILLUSTRATED, Woche
84/38, Zusammenfassung Nr. S03,S02,84-
236112/38, 31. Oktober 1984, Derwent
Publications Ltd, London, GB; & SU-A-1 068 782
(MOSC POWER INST.) 23-01-1984
Optika i spektroskopiya, volume XXXI, issue 5,
published in 1971, Nauka (Leningrad), V.A.
Zamkov and V.A. Radkevich "Polyarizatsionny
interferometr dlya izmereniya vynuzhdennoi
anizotropii", pages 811-816

⑦④ Vertreter: **Patentanwälte Beetz sen. - Beetz jun.
Timpe - Siegfried - Schmitt-Fumian
Steinsdorfstrasse 10
D-8000 München 22 (DE)**

## Beschreibung

Die Erfindung betrifft ein Interferenz-Polarisationsrefraktometer der im Oberbegriff der Patentansprüche 1 und 2 angegebenen Art. Ein solches Interferenz-Polarisationsrefraktometer ist aus dem Artikel von L. J. Soltzberg et al. in Applied Optics, vol. 16, Nr. 12, 1977, S. 3206-3209 bekannt.

Das Interferenz-Polarisationsrefraktometer (IPR) gemäß Soltzberg et al. weist eine Quelle polarisierter Strahlung auf und — im Strahlengang hintereinander angeordnet — einen Strahlteiler zum räumlichen Spalten des Lichtbündels in zwei orthogonal zueinander polarisierte Lichtbündel, ein Mittel zum räumlichen Zur-Deckung-Bringen der orthogonal polarisierten Lichtbündel, eine Baugruppe zur Messung der Gangdifferenz der Lichtbündel sowie einen zwischen dem Strahlteiler und dem Mittel zur räumlichen Zur-Deckung-Bringen der orthogonal polarisierten Lichtbündel angeordneten Probenhalter. Hierbei sind der Strahlteiler und das Mittel zum räumlichen Zur-Deckung-Bringen der Lichtbündel als eine einstückige planparallele Kristallplatte ausgebildet.

Das bekannte Refraktometer hat lediglich eine niedrige Anzeigekonstanz, die durch eine hohe Empfindlichkeit gegen Temperatur- und mechanische Einflüsse bedingt ist.

Die hohe Empfindlichkeit gegen diese Einflüsse ist auf folgendes zurückzuführen. Bei der Teilung des Ausgangslichtbündels in zwei orthogonal zueinander polarisierte Lichtbündel breiten sich die letzteren in der Kristallplatte als ein ordentliches und ein außerordentliches Strahlenbündel aus und gewinnen aufgrund des Unterschiedes in den Brechzahlen für die Polarisationsrichtungen des ordentlichen und des außerordentlichen Strahls eine gewisse Gangdifferenz, deren Betrag von der Temperatur und Lage der Kristallplatte abhängig ist. Bei einem wiederholten Durchgang durch die Kristallplatte breitet sich (bei der Deckung der Lichtbündel) als das ordentliche Lichtbündel dasjenige aus, das sich als das ordentliche bei der Teilung fortgepflanzt hat, und als das außerordentliche dasjenige Lichtbündel, das sich als das außerordentliche bei der Teilung fortgepflanzt hat. Die gesamte bei der Teilung und Deckung gewonnene Gangdifferenz erweist sich daher als etwa doppelt so groß wie die bei der Teilung (Deckung) gewonnene Gangdifferenz und hängt auch von der Temperatur und Lage der Kristallplatte ab.

Außerdem ist ein Interferenz-Polarisationsrefraktometer bekannt, das eine Quelle polarisierter Strahlung und — in ihrem Strahlengang hintereinander angeordnet — einen Strahlteiler für das Lichtbündel in zwei zueinander orthogonal polarisierte Lichtbündel, ein Halbwellenlängenplättchen (das hier insbesondere aus zwei Viertelwellenlängenplättchen zusammengesetzt sein kann), ein Mittel zum räumlichen Zur-Deckung-Bringen der orthogonal polarisierten Lichtbündel, eine Baugruppe zur Messung der Gangdifferenz der Komponenten eines elliptisch polarisierten Lichts sowie eine zwischen dem Mittel zur räumlichen Teilung und dem Mittel zum räumlichen Zur-Deckung-Bringen angeordnete Meßküvette (s. z.B. die Sammlung Analiticheskoe priborostroenie, Metody i pribory dlya analiza zhidkikh sred, Bd. 1, Teil 1, herausgegeben 1975 (Tbilisi): I.S. Vasilieva et al. "Vozmozhnye puti povyshenia chuvstvitelnosti zhidkostnykh refraktometricheskikh analizatorov" ("Mögliche Wege der Empfindlichkeitssteigerung bei refraktometrischen Flüssigkeitsanalysatoren") enthält.

In der schaltungstechnischen Lösung werden, als Strahlteiler und zum räumlichen Zur-Deckung-Bringen der polarisierten Lichtbündel zwei planparallele Kristallplatten gleicher Dicke und Orientierung bezüglich der optischen Achse angewendet. Beim passieren sowohl der ersten als auch der zweiten Kristallplatte gewinnen die Lichtbündel eine von der Temperatur und Lage der jeweiligen Platte bezüglich der Lichtbündel abhängige Gangdifferenz. Zum Unterschied vom oben beschriebenen IPR werden aber die temperaturabhängigen Änderungen der Gangdifferenz in diesem Fall z.T. dadurch ausgeglichen, daß das zwischen den Kristallplatten angeordnete Halbwellenlängenplättchen den Polarisationsrichtungswinkel in jedem Lichtbündel um 90° ändert. Hierbei breiten sich die Lichtbündel, die sich in der ersten Platte als das ordentliche und außerordentliche Lichtbündel fortgepflanzt haben, in der zweiten Platte als das außerordentliche bzw. ordentliche Lichtbündel aus, und die in der ersten und zweiten Kristallplatte gewonnenen Gangdifferenzen weisen verschiedene Vorzeichen auf. Trotzdem gelingt es nicht, eine vollständige Kompensation zu erreichen, denn die Kristallplatten liegen in einem bestimmten Abstand voneinander und deren Temperatur und Lage ändern sich in verschiedener Weise. Ein weiterer Grund für die bleibende Temperaturempfindlichkeit besteht darin, daß die starre Befestigung der Kristallplatte Spannungen in diesen hervorruft, deren Betrag von den Temperaturbedingungen und den Bedingungen der Befestigung abhängt. Da im bekannten Refraktometer zur Teilung und zum Zur-Deckung-Bringen der Lichtbündel zwei Kristallplatten verwendet werden, sind diese Bedingungen verschieden. Wesentlich ist, daß die Möglichkeiten einer Entspannung in den Kristallplatten beim bekannten Refraktometer äußerst begrenzt sind, weil die Änderungen der gegenseitigen Lage der Kristallplatten große Änderungen der Gangdifferenz bewirken und deren starre Befestigung sich als notwendig erweist.

Es ist aus der DE-A-935 094 ein Interferenz-Refraktometer bekannt, das eine Quelle natürlicher Strahlung (unpolarisiert) und, in ihrem Strahlengang hintereinander angeordnet, einen Strahlteiler, ein Mittel zum räumlichen Zur-Deckung-Bringen der Lichtbündel, eine Baugruppe zur visuellen Bestimmung der Gangdifferenz der Lichtbündel sowie einen zwischen dem Strahlteiler und dem Mittel zum räumlichen Zur-Deckung-Bringen der Lichtbündel angeordneten Probenhalter aufweist. Hierbei sind der Strahlteiler und das Mittel zum räumlichen Zur-Deckung-Bringen der Lichtbündel als planparallele Platte ausgeführt.

Dieses bekannte Refraktometer hat eine niedrige Empfindlichkeit für Messungen der Gangdifferenz. Für hochempfindliche Messungen werden Polarisationsinterferometer verwendet.

Die FR-A-2 184 829 beschreibt ein Polarisationsinterferometer, das eine Polarisationsstrahlungsquelle und, in ihrem Strahlengang hintereinander angeordnet, einen Strahlteiler, ein Mittel zum räumlichen Zur-Deckung-Bringen der Lichtbündel, eine Baugruppe zum Messen der Gangdifferenz der Lichtbündel sowie einen zwischen dem Strahlteiler und dem Mittel zum räumlichen Zur-Deckung-Bringen der Lichtbündel angeordneten Probenhalter enthält. Hierbei ist das Mittel zum räumlichen Zur-Deckung-Bringen der Lichtbündel als strahlteilende Platte ausgeführt und zwischen dem Strahlteiler und dem Mittel zum räumlichen Zur-Deckung-Bringen der Lichtbündel sind für das erste und das zweite Lichtbündel gesondert Reflektoren (oder Winkelreflektoren) angeordnet.

Dieses Refraktometer hat, bedingt durch eine starke Empfindlichkeit im Hinblick auf Temperatur- und mechanische Störungen, eine niedrige Anzeigestabilität. Die starke Empfindlichkeit im Hinblick auf Störungen ist vor allem dadurch bedingt, daß Temperaturänderungen und/oder die Lage der Reflektoren zur Änderung der Gangdifferenz der interferierenden Lichtbündel führt.

Der Erfindung liegt die Aufgabe zugrunde, ein Interferenz-Polarisationsrefraktometer der eingangs genannten Art so weiterzuentwickeln, daß dessen schaltungstechnische Lösung eine wesentliche Verringerung der Abhängigkeit der gesamten Gangdifferenz der Lichtbündel von der Temperatur und Lage des Strahlteilers und des Mittels zum räumlichen Zur-Deckung-Bringen der zueinander orthogonal polarisierten Lichtbündel ermöglicht, was es gestattet, die Geräteanzeigekonstanz und folglich auch die Meßempfindlichkeit und -genauigkeit zu erhöhen.

Diese Aufgabe wird anspruchsgemäß gelöst.

In dem gemäß der vorliegenden Erfindung ausgeführten Interferenz-Polarisationsrefraktometer weist die gesamte Gangdifferenz der Lichtbündel (in der ersten Ausführungsform) eine schwache und (in der zweiten Ausführungsform) praktisch keine Abhängigkeit von der Temperatur und Lage der planparallelen Kristallplatte auf, die in den vorliegenden Ausführungsformen so als Strahlteiler wie auch als Mittel zum räumlichen Zur-Deckung-Bringen der orthogonal polarisierten Lichtbündel eingesetzt wird, was es gestattet, die Anzeigekonstanz des IPR zu steigern (die Drift und den Fluktuationspegel des Ausgangssignals zu senken) und somit die Meßempfindlichkeit und -genauigkeit zu erhöhen.

Ein weiterer Vorteil des erfindungsgemäßen Gerätes ist eine Kostensenkung, die durch Einsparung eines kostenaufwendigen kristallinen Materials und durch Vereinfachung der Herstellung erzielt wird.

Die Erfindung soll durch die nachstehende Beschreibung konkreter Ausführungsformen anhand der Zeichnung näher erläutert werden. Es zeigen:

Fig. 1 schematisch ein Interferenz-Polarisationsrefraktometer in einer Ausführungsform mit Reflektoren mit einer ebenen Reflexionsfläche;

Fig. 2 ein IPR gemäß Fig. 1 in der Ausführungsform mit Winkelreflektoren.

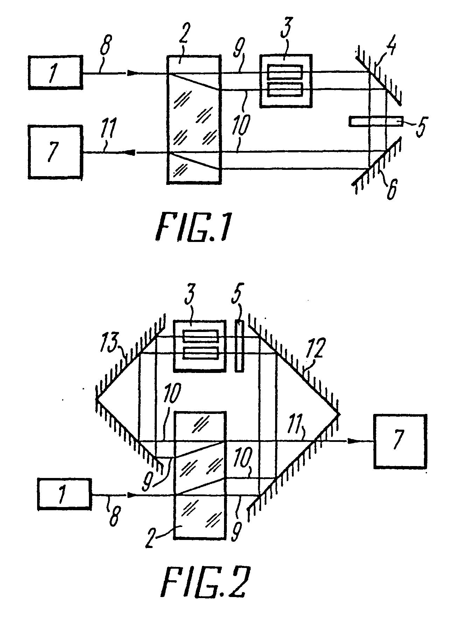

Das in Fig. 1 dargestellte Interferenz-Polarisationsrefraktometer enthält eine Quelle 1 polarisierter Strahlung und — in ihrem Strahlengang hintereinander angeordnet — einen Strahlteiler zur Teilung des Lichtbündels in zwei zueinander orthogonal polarisierte Lichtbündel, das in Form einer planparallelen Kristallplatte 2 (beispielsweise aus Kalzit) hergestellt ist, eine Meßküvette 3, einen Reflektor 4 mit einer ebenen Reflexionsfläche, als welcher ein oberflächenbedampfter Planspiegel zum Einsatz gelangt, ein Halbwellenlängenplättchen 5 (beispielsweise aus kristallinem Quarz), einen zweiten Reflektor 6, als welcher auch ein oberflächenbedampfter Planspiegel verwendet wird, ein Mittel zum räumlichen Zur-Deckung-Bringen der orthogonal polarisierten Lichtbündel, als welches eine planparallele Kristallplatte 2 eingesetzt wird, und eine Baugruppe 7 zur Messung der Gangdifferenz der Komponenten eines elliptisch polarisierten Lichts.

Die Reflektoren 4 und 6 sind miteinander starr verbunden, und die Reflexionsfläche des Reflektors 6 steht auf der Reflexionsfläche des Reflektors 4 senkrecht, wobei die planparallele Platte 2 in der Weise liegt, daß deren Hauptschnitt auf den ebenen Reflexionsflächen der Reflektoren 4 und 6 senkrecht steht.

In der beschriebenen Ausführungsform der Erfindung ist die Meßküvette 3 mit zwei planparallelen Zellen für ein Untersuchungs- bzw. ein Vergleichsmedium zwischen der Kristallplatte 2 und dem Reflektor 4 angeordnet dargestellt. Falls es aber z.B. aus konstruktiven Erwägungen erforderlich ist, kann die Küvette 3 zwischen dem Reflektor 4 und dem Halbwellenlängenplättchen 5, zwischen dem Halbwellenlängenplättchen 5 und dem Reflektor 6, zwischen dem Reflektor 6 und der Kristallplatte 2 sowie zwischen zwei Viertelwellenlängenplättchen angeordnet werden, wenn das Halbwellenlängenplättchen 5 aus zwei Viertelwellenlängenplättchen zusammengesetzt hergestellt ist. Als Baugruppe 7 zur Messung der Gangdifferenz der Komponenten des elliptisch polarisierten Lichts kann beispielsweise eine Einrichtung eingesetzt werden, die aus einem Viertelwellenlängenkompensator (Sénarmont-Kompensator), einem Polarisator und einem Fotoempfänger besteht. Bei der Durchführung von hochempfindlichen Messungen kann die Baugruppe 7 auch einen elektro- bzw. magnetooptischen Modulator enthalten.

Das Interferenz-Polarisationsrefraktometer (bzw. dessen in Fig. 1 dargestellte Ausführungsform) arbeitet wie folgt:

Das Lichtbündel 8 von der Strahlungsquelle 1 wird durch die Kristallplatte 2 in zwei in orthogonalen Ebenen linear polarisierte Lichtbündel 9 und 10 geteilt, deren eines durch eine Meßzelle der Küvette 3 und deren anderes durch eine Vergleichszelle der gleichen Küvette 3 durchgeht. Im weiteren werden die beiden Bündel 9 und 10 durch den Spiegel des Reflektors 4 rückgestrahlt, passieren das Halbwellenlängenplättchen 5, das den Polarisationsrichtungswinkel eines jeden der Bündel 9, 10 um 90° ändert, werden durch den Spiegel des Reflektors 6 rückgestrahlt und durch die Kristallplatte 2 zu einem Bündel 11 zur Deckung gebracht. Infolge der Deckung der Bündel 9, 10 mit orthogonalen Polarisationen bildet sich das Bündel 11 mit einer elliptischen Polarisation. Die Komponenten des elliptisch polarisierten Lichts weisen eine Gangdifferenz auf, die zu einer zu untersuchenden Differenz von Brechzahlen zu vergleichender Medien proportional ist. Die Gangdifferenz wird mit Hilfe der Baugruppe 7 zur Messung der Gangdifferenz gemessen.

Wie aus Fig. 1 ersichtlich, breitet sich das Lichtbündel 9 nach der Teilung des Lichtbündels 8 durch die Kristallplatte 2 in zwei zueinander orthogonal polarisierte Lichtbündel als ein ordentliches Bündel (o-Strahl, ordinary) und das Lichtbündel 10 als ein außerordentliches Bündel (e-Strahl, extraordinary) aus, während sich bei der Deckung der Lichtbündel 9 und 10 als das ordentliche das Bündel 10 und als das außerordentliche das Bündel 9 fortpflanzt. Die durch die Lichtbündel 9, 10 bei der Teilung gewonnene Gangdifferenz wird also durch die durch die Lichtbündel 9, 10 bei der Deckung gewonnene Gangdifferenz ausgeglichen. Da zur Teilung und dem Zur-Deckung-Bringen der Lichtbündel 9, 10 ein und dieselbe Platte 2 benutzt wird, ist diese Kompensation beinahe ideal.

Es muß auch hervorgehoben werden, daß die Amplituden- und Phasenänderungen der Lichtwellen bei der Reflexion vom Spiegel des Reflektors 4 durch die Amplituden- und Phasenänderungen der Lichtwellen bei der Reflexion vom Spiegel des Reflektors 6 kompensiert werden, weil das zwischen diesen (Spiegeln) liegende Halbwellenlängenplättchen 5 den Polarisationsrichtungswinkel in jedem Lichtbündel um einen Winkel von 90° verschwenkt.

Die Abnahme der Empfindlichkeit gegen eine Änderung der Lage der Kristallplatte 2 hängt damit zusammen, daß die Verschwenkungen der Kristallplatte 2 in der Hauptschnittebene keine Änderung der gesamten Gangdifferenz veranlassen, weil sich die Lage der Kristallplatte 2 in bezug auf die zu spaltenden und zu deckenden Lichtbündel 9, 10 bei derartigen Verschwenkungen gleichermaßen ändert und die entsprechenden Änderungen der Gangdifferenz also nach dem Absolutwert gleich und nach dem Vorzeichen entgegengesetzt sind. Dies gestattet es, die Anforderungen an die Starrheit der Befestigung der Kristallplatte 2 zu lockern, wodurch sich ihrerseits die Einflüsse von Temperaturspannungen reduzieren lassen.

Die in Fig. 2 dargestellte Ausführungsform des Interferenz-Polarisationsrefraktometers unterscheidet sich von dem in Fig. 1 aufgeführten IPR dadurch, daß anstelle des Reflektors 4 mit einer ebenen Reflexionsfläche ein (in Form eines Systems aus zwei oberflächenbedampften Planspiegeln mit einem Winkel von 90° einschließenden Reflexionsflächen ausgeführter) Winkelreflektor 12 und anstelle des Reflektors 6 ein zweiter Winkelreflektor 13 angeordnet sind. Die Winkelreflektoren 12 und 13 sind miteinander fest verbunden.

Die Meßküvette 3 ist im vorliegenden Fall zwischen dem Halbwellenlängenplättchen 5 und dem Winkelreflektor 13 angeordnet. Falls aber erforderlich, kann die Küvette 3 zwischen den Spiegeln der Winkelreflektoren 12 oder 13, zwischen der Kristallplatte 2 und einem beliebigen der Winkelreflektoren 12 oder 13, zwischen dem Winkelreflektor 12 und dem Halbwellenlängenplättchen 5 sowie zwischen den Viertelwellenlängenplättchen untergebracht werden, wenn das Halbwellenlängenplättchen 5 aus zwei Viertelwellenlängenplättchen zusammengesetzt hergestellt ist.

Die Arbeitsweise der Ausführungsform des in Fig. 2 dargestellten IPR unterscheidet sich von der Arbeitsweise des in Fig. 1 aufgeführten IPR lediglich dadurch, daß die Lichtbündel 9 und 10 insgesamt vier Reflexionen (zwei — durch die Spiegel des Winkelreflektors 12 und zwei — durch die Spiegel des Winkelreflektors 13) erfahren und, bedingt durch die Lage der Winkelreflektoren 12 und 13 gemäß Fig. 2, auf die Kristallplatte 2 (bei einer räumlichen Deckung) parallel zum Lichtbündel 8 einfallen.

Dieser Unterschied bietet für die in Fig. 2 aufgeführte Ausführungsform des IPR zusätzliche Vorteile, die damit zusammenhängen, daß die gesamte Gangdifferenz bei beliebigen Änderungen der gegenseitigen Lage der Kristallplatte 2 und des Systems der Winkelreflektoren 12, 13 im ganzen unveränderlich bleibt.

Dies gestattet es, die Kristallplatte 2 grundsätzlich frei anzuordnen, was die Einflüsse der Temperaturspannungen praktisch vollkommen eliminiert.

Es muß auch betont werden, daß die Amplituden- und Phasenänderungen der Lichtwellen bei den Reflexionen von den Spiegeln des Winkelreflektors 12 durch die Amplituden- und Phasenänderungen der Lichtwellen bei den Reflexionen von den Spiegeln des Winkelreflektors 13 kompensiert werden, weil das zwischen den Winkelreflektoren 12, 13 angeordnete Halbwellenlängenplättchen 5 die Polarisationsrichtungswinkel in jedem Lichtbündel um 90° verschwenkt.

Das gemäß der vorliegenden Erfindung ausgeführte Interferenz-Polarisationsrefraktometer kann für eine quantitative und qualitative Analyse unterschiedlicher Medien mit einer optischen Methode nach einer Differenz von Brechzahlen eingesetzt werden.

**Patentansprüche**

1. Interferenz-Polarisationsrefraktometer, das eine Quelle (1) polarisierter Strahlung und in ihrem Strahlengang hintereinander angeordnet

einen Strahlteiler zur Teilung des Lichtbündels in zwei zueinander orthogonal polarisierte Lichtbündel (9, 10), ein Halbwellenlängenplättchen (5), ein Mittel zum räumlichen Zur-Deckung-Bringen der zueinander orthogonal polarisierten Lichtbündel (9, 10), eine Baugruppe (7) zur Messung der Gangdifferenz der Komponenten von elliptisch polarisiertem Licht, sowie eine zwischen dem Strahlteiler und dem Mittel zum Zur-Deckung-Bringen untergebrachte Meßküvette (3) aufweist,
dadurch gekennzeichnet,
daß zwischen dem Strahlteiler zur Teilung des Lichtbündels in zwei zueinander orthogonal polarisierte Lichtbündel (9, 10) und dem Halbwellenlängenplättchen (5) ein erster Reflektor (4) mit einer ebenen Reflexionsfläche, zwischen dem Halbwellenplättchen (5) und dem Mittel zum räumlichen Zur-Deckung-Bringen der zueinander orthogonal polarisierten Lichtbündel (9, 10) ein zweiter Reflektor (6) mit einer zur Reflexionsfläche des ersten Reflektors (4) senkrechten ebenen Reflexionsfläche angeordnet, die beiden Reflektoren (4, 6) miteinander starr verbunden und der Strahlteiler, ebenso wie das Mittel zum Zur-Deckung-Bringen der zueinander orthogonal polarisierten Lichtbündel (9, 10) in Form einer planparallelen Kristallplatte (2) ausgeführt sind, wobei die die optische Achse der Kristallplatte (2) und die Senkrechte zur Strahleintrittsfläche der Kristallplatte enthaltende Ebene auf den Reflexionsflächen beider Reflektoren (4, 6) senkrecht steht.

2. Interferenz-Polarisationsrefraktometer, das eine Quelle (1) polarisierter Strahlung und in ihrem Strahlengang hintereinander angeordnet einen Strahlteiler zur Teilung des Lichtbündels in zwei zueinander orthogonal polarisierte Lichtbündel (9, 10), ein Halbwellenlängenplättchen (5), ein Mittel zum räumlichen Zur-Deckung-Bringen der zueinander orthogonal polarisierten Lichtbündel (9, 10), eine Baugruppe (7) zur Messung der Gangdifferenz der Komponenten eines elliptisch polarisierten Lichts sowie eine zwischen dem Strahlteiler und dem Mittel zum Zur-Deckung-Bringen untergebrachte Meßküvette (3) enthält,
dadurch gekennzeichnet,
daß zwischen dem Strahlteiler zur Teilung des Lichtbündels in zwei zueinander orthogonal polarisierte Lichtbündel (9, 10) und dem Halbwellenlängenplättchen (5) ein erster Winkelreflektor (12), zwischen dem Halbwellenlängenplättchen (5) und dem Mittel zum räumlichen Zur-Deckung-Bringen der zueinander orthogonal polarisierten Lichtbündel (9, 10) ein zweiter Winkelreflektor (13) angeordnet ist, die Winkelreflektoren (12, 13) starr miteinander verbunden und so angeordnet sind, daß die zu den Reflexionsflächen des ersten Winkelreflektors (12) senkrechte Ebene parallel zu der zu den Reflexionsflächen des zweiten Winkelreflektors (13) senkrechten Ebene ist, und daß der Strahlteiler und das Mittel zum räumlichen Zur-Deckung-Bringen der orthogonal polarisierten Lichtbündel (9, 10) als planparallele Kristallplatte (2) ausgeführt ist, wobei die zu allen Reflexionsflächen der beiden Winkelreflektoren (12, 13) senkrechte Ebene und die die optische Achse der Kristallplatte (2) und die Senkrechte zur Strahleintrittsfläche der Kristallplatte enthaltende Ebene parallel zueinander sind oder aufeinander senkrecht stehen.

**Revendications**

1. Réfractomètre de polarisation d'interférence qui présente une source (1) d'un rayonnement polarisé et, agencés les uns derrière les autres dans le trajet du rayonnement, un diviseur de rayonnement pour la division du faisceau lumineux en deux faisceaux lumineux polarisés orthogonalement l'un à l'autre (9, 10), une plaque demi-onde (5), un moyen pour porter en recouvrement, dans l'espace, les faisceaux lumineux orthogonalement polarisés l'un à l'autre (9, 10), un ensemble (7) pour la mesure de la différence des composants d'une lumière elliptiquement polarisée, ainsi qu'une cuve de mesure placée entre le diviseur de rayonnement et le moyen pour porter en recouvrement, caractérisé en ce qu'entre le diviseur pour répartir le faisceau lumineux en deux faisceaux lumineux orthogonalement polarisés l'un à l'autre (9, 10) et la plaque demi-onde (5) est agencé un premier réflecteur (4) avec une surface plane de réflexion, entre la plaque demi-onde (5) et le moyen pour porter en recouvrement dans l'espace les faisceaux lumineux (9, 10) polarisés orthogonalement l'un à l'autre est agencé un second réflecteur (6) avec une surface plane de réflexion perpendiculaire à la surface de réflexion du premier réflecteur (4), les deux réflecteurs (4, 5) étant reliés rigidement l'un à l'autre et le diviseur de rayonnement ainsi que le moyen pour porter en recouvrement les faisceaux lumineux polarisés orthogonalement l'un à l'autre (9, 10) étant réalisés sous la forme d'une lame cristalline (2) à faces planes et parallèles, l'axe optique de la lame cristalline (2) et la perpendiculaire au plan contenant la surface d'entrée du rayonnement de la lame cristalline étant perpendiculaires aux surfaces de réflexion des deux réflecteurs (4, 6).

2. Réfractomètre de polarisation d'interférence qui contient une source (1) d'un rayonnement polarisé et, agencés les uns derrière les autres dans le trajet du rayonnement, un diviseur de rayonnement pour la division du faisceau lumineux en deux faisceaux lumineux orthogonalement polarisés l'un à l'autre (9, 10), une plaque demi-onde (5), un moyen pour porter en recouvrement dans l'espace les faisceaux lumineux orthogonalement polarisés l'un à l'autre (9, 10), un ensemble (7) pour la mesure de la différence des composants d'une lumière elliptiquement polarisée ainsi qu'une cuve de mesure (3) disposée entre le diviseur de rayonnement et le moyen pour porter en recouvrement, caractérisé en ce qu'entre le diviseur de rayonnement pour la division du faisceau lumineux en deux faisceaux lumineux polarisés orthogonalement l'un à l'autre (9, 10) et la plaque demi-onde (5) est agencé un premier réflecteur en coin (12), entre la plaque demi-onde (5) et le moyen pour porter en recouvrement dans l'espace les faisceaux lumineux orthogonalement polarisés l'un à l'autre (9, 10) est agencé un second réflecteur en coin (13), les réflecteurs en coin (12, 13) étant rigidement reliés l'un à l'autre et agencés de manière que le plan perpendiculaire à la surface de réflexion du premier réflecteur en coin (12) soit parallèle au plan perpendiculaire à la surface de réflexion du second réflecteur en coin (13) et que le diviseur de rayonnement et le moyen pour porter en recouvrement dans l'espace le faisceau de lumière polarisée orthogonalement (9, 10) est réalisé sous la forme d'une lame cristalline à faces planes et parallèles (2), ainsi le plan perpendiculaire à toutes les surfaces de réflexion des deux réflecteurs en coin (12, 13) et le plan contenant l'axe optique de la lame cristalline (2) et la perpendiculaire à la surface d'entrée du rayonnement de la plaque cristalline sont parallèles l'un à l'autre ou bien perpendiculaires l'un à l'autre.

**Claims**

1. An interference polarisation refractometer having a source (1) of polarised radiation and, arranged one behind the other in their ray path, a ray splitter for splitting the light beam into two light beams (9, 10) polarised orthogonally to each other, a half-wave plate (5), a means for spatially bringing to coincidence the mutually orthogonally polarised light beams (9, 10), an assembly (7) for measuring the path difference of the components of elliptically polarised light, and a measuring cell (3) accommodated between the ray splitter and the means for bringing to coincidence,
characterised in that
a first reflector (4) with a plane reflecting surface is arranged between the ray splitter, for splitting the light beam into two mutually orthogonally polarised light beams (9, 10), and the half-wave plate (5), and a second reflector (6) is arranged between the half-wave plate (5) and the means for spatially bringing to coincidence the mutually orthogonally polarised light beams (9, 10), which second reflector (6) has a plane reflecting surface perpendicular to the reflecting surface of the first reflector (4), the two reflectors (4, 6) being rigidly joined together, and the ray splitter, as well as the means for bringing to coincidence the light beams (9, 10) being constructed in the form of a plane-parallel crystal plate (2), the plane containing the optical axis of the crystal plate (2) and the perpendicular to the ray entry face of the crystal plate being perpendicular to the reflecting surfaces of the two reflectors (4, 6).

2. An interference polarisation refractometer having a source (1) of polarised radiation and, arranged one behind the other in their ray path, a ray splitter for splitting the light beam into two light beams (9, 10) polarised orthogonally to each other, a half-wave plate (5), a means for spatially bringing to coincidence the mutually orthogonally polarised light beams (9, 10), an assembly (7) for measuring the path difference of the components of an elliptically polarised light, and a measuring cell (3) accommodated between the ray splitter and the means for bringing to coincidence,
characterised in that
a first angle reflector (12) is arranged between the ray splitter, for splitting the light beam into two mutually orthogonally polarised light beams (9, 10), and the half-wave plate (5), and a second angle reflector (13) is arranged between the half-wave plate (5) and the means for spatially bringing to coincidence the mutually orthogonally polarised light beams (9, 10), the angle reflectors (12, 13) being rigidly joined together and arranged in such a way that the plane perpendicular to the reflecting surfaces of the first angle reflector (12) is parallel to the plane perpendicular to the reflecting surfaces of the second angle reflector (13), and the ray splitter and the means for spatially bringing to coincidence the mutually orthogonally polarised light beams (9, 10) being constructed as a plane-parallel crystal plate (2), the plane perpendicular to all the reflecting surfaces of the two angle reflectors (12, 13) and the plane containing the optical axis of the crystal plate (2) and the perpendicular to the ray entry face of the crystal plate being either parallel to each other or perpendicular to each other.

FIG.1

FIG.2